# EUROPEAN PATENT APPLICATION

(11) **EP 2 296 335 A1**
(43) Date of publication of application: **16.03.2011**
(21) Application number: 09797377.0
(22) Date of filing: 25.05.2009
(51) Int. Cl.: H04L 29/06, H04L 12/56, H04L 12/14

(54) **METHOD FOR LIVE SESSION SWITCHING, METHOD FOR SYNCHRONOUS MULTI-TERMINAL CHANNEL SWITCHING AND TERMIANL**

(30) Priority: 18.07.2008 CN 200810134701
(71) Applicant: Huawei Technologies Co., Ltd., Longgang District, Shenzhen Guangdong 518129 (CN)
(72) Inventor: LIU, Ji, Longgang District 518129, Shenzhen (CN)
(74) Representative: Kreuz, Georg Maria
(86) International application number: PCT/CN2009/071961
(87) International publication number: WO 2010/006530

(57) **Abstract**

In the field of communication application, a method for switching of a live session, a method for switching a channel synchronously among multiple terminals, and a terminal are provided, so that user experience can be enriched, and different user demands can be satisfied. The method includes the following steps. A switching target terminal or a Service Control Function (SCF) receives a live session switching request sent by a switching original terminal, in which the switching request carries an identifier of a session between the switching original terminal and the SCF, a media type to be switched, and information of a current channel. The switching target terminal establishes a live session with the SCF according to the switching request. A terminal taking charge of channel switching sends a notification of channel switching to the SCF or other terminals participating in the switching of the live session, in which the notification carries information of the switched channel.

## Description

This application claims priority to Chinese Patent Application No. 200810134701.9, filed with the Chinese Patent Office on July 18, 2008 and entitled "METHOD FOR SWITCHING A LIVE SESSION, METHOD FOR SWITCHING CHANNEL SYNCHRONOUSLY AMONG MULTIPLE TERMINALS, AND TERMIANL", which is incorporated herein by reference in its entirety.

### FIELD OF THE INVENTION

The present invention relates to the field of multimedia communication technology, and in particular, to a method for switching a live session, a method for switching a channel synchronously among multiple terminals, and a terminal.

### BACKGROUND OF THE INVENTION

Internet Protocol Television (IPTV) is an interactive and manageable multimedia service, which can transmit television, videos, texts, graphs, and data through Internet Protocol (IP) networks, and provide Quality of Service (QoS) and Quality of Experience (QoE). IPTV services include two types of basic service, which are TV live service and Video on Demand (VOD) service, in which the TV live service adopts the multicast technology.

The IPTV is a bi-directional service, and can provide users with personalized and customized services. At the same time, the Fixed-Mobile Convergence (FMC) becomes a focus of development in the field of communications. The ultimate goal of the FMC is to provide the function crossing of multiple locations, access techniques, and terminals, so as to provide users with user experience of seamless service switching, so that the users can truly enjoy any application through any terminal device anywhere. Therefore, the services combining the IPTV and the FMC can enrich user experience, and satisfy user demands.

Scenario 1 in which a user expects to experience the services:
A user receives a certain live program through a mobile terminal A at home. When the user enters a bedroom, the user switches the video of the live program to a display device C, and the audio is still received by the mobile terminal A. When the user uses the mobile terminal A to switch a channel, the display device C also synchronously switches the channel.

Scenario 2 in which a user expects to experience the services:
A user receives a certain live program through a mobile terminal A at home. The live program includes two video streams (a video stream 1 and a video stream 2) and one audio stream. When the user enters a bedroom, the user switches the video stream 1 of the live program to a display device C, and the video stream 2 and the audio are still received by the mobile terminal A. When the user uses the mobile terminal A to switch a channel, the display device C also synchronously switches the channel.

Scenario 3 in which a user expects to experience the services:
A user receives a certain live program through a mobile terminal A at home. When the user enters a bedroom, the user switches the audio of the live program to an audio device B, and switches the video to a display device C. When the user uses the mobile terminal A to switch a channel, the audio device B and the display device C also synchronously switch the channel.

Scenario 4 in which a user expects to experience the services:
A user receives a certain live program through a mobile terminal A at home. When the user enters a bedroom, the user switches the audio of the live program to an audio device B, switches the video to a display device C, and specifies the display device C to take charge of channel switching. The user turns off the mobile terminal A. When the user uses the display device C to switch a channel, the audio device B also synchronously switches the channel.

In the prior art, in a method for implementing media session switching, a Mobile Node (MN) establishes a session with a Correspondent Node (CN), and performs audio-video communication. The MN uses a command REFER to notify a Network Appliance with audio ability (NAa) of establishing a session with the CN. The audio stream of the MN and the CN is switched to the NAa. The command REFER carries a header field Mobility. The header field includes an identifier of a session between the MN and the CN, and a media type (audio) to be established. The NAa establishes a session with the CN according to parameters in the header field Mobility, and performs audio transmission. Meanwhile, the MN may also use a command REFER to notify a Network Appliance with video ability (NAv) of establishing a session with the CN. The video stream of the MN and the CN is switched to the NAv. The command carries a header field Mobility. The header field includes the identifier of the session between the MN and the CN, and a media type (video) to be established. The NAv establishes a session with the CN according to parameters in the header field Mobility, and performs video transmission. After knowing that the session between the NAa and the CN, and the session between the NAv and the CN are successfully established, the MN may end the session with the CN, and the NAa and the NAv communicate with the CN. For example, the header field Mobility may be:
Mobility: 940620@comm.ccu.edu; media = audio
Mobility: a84b4c76e66710; media = audio, video.

The prior art has the following problems: During audio-video media switching, a header field Mobility carried in a command REFER only includes an identifier of a session between an MN and a CN, and an audio and/or video media type to be established. User experience is limited, and different user demands cannot be satisfied. For example, when a live program includes multiple audio streams or video streams, precise media switching with a media line as the unit cannot be achieved; and after a live session is successfully switched, switching multi-terminal channel between a switching original terminal and a switching target terminal synchronously cannot be achieved either.

### SUMMARY OF THE INVENTION

The present invention provides a method for switching a live session, a method for switching a channel synchronously among multiple terminals, and a terminal, so that user experience is enriched, synchronous channel switching among multiple terminals after switching of the live session is achieved, and different user demands are satisfied.

To achieve the objective, as its first aspect the present invention provides a method for switching of a live session. The method includes:
receiving, by a switching target terminal or a Service Control Function (SCF), a live session switching request sent by a switching original terminal, in which the switching request carries an identifier of a session between the switching original terminal and the SCF, a media type to be switched, and information of a current channel; and
establishing, by the switching target terminal, a live session with the SCF according to the switching request.

As a second aspect of the present invention a method for switching a channel synchronously among multiple terminals includes:
establishing, by each of multiple terminals, a live session with an SCF;
sending, by a terminal taking charge of channel switching, a channel switching notification, in which the channel switching notification carries information of a switched channel;
joining, by other terminals participating in switching of live session , a multicast group of the switched channel according to the channel switching notification, and receiving synchronously media content of the switched channel.

As a third aspect of the present invention a terminal includes:
a switching request receiving unit, configured to receive a live session switching request sent by a switching original terminal, in which the switching request carries an identifier of a session between the switching original terminal and an SCF, a media type to be switched, and information of a current channel;
a live session establishment unit, configured to establish a live session with the SCF according to the live session switching request; and
a channel switching notification unit, configured to send a channel switching notification to the SCF or other terminals participating in live session switching, in which the channel switching notification carries information of a switched channel, so that other terminals participating in the switching of live session join a multicast group of the switched channel according to the channel switching notification, and synchronously receive media content of the switched channel.

In view of the technical solutions, a switching original terminal sends a live session switching request to a switching target terminal or an SCF, in which the switching request carries an identifier of a session between the switching original terminal and the SCF, a media type to be switched, and information of a current channel. The switching target terminal establishes a live session with the SCF according to the switching request. Thus, in one aspect, user experience is enriched, and different user demands are satisfied; in another aspect, when a terminal taking charge of channel switching sends a notification of channel switching to the SCF or other terminals participating in live session switching, the notification of channel switching carries information of the switched channel, so that other terminals participating in the live session switching synchronously receive media content of the switched channel. Thus, synchronous channel switching between multiple terminals after the live session switching is achieved.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for switching a live session according to an embodiment of the present invention;
FIG. 2 is a flow chart of a method for switching a channel synchronously among multiple terminals according to an embodiment of the present invention;
FIG. 3 is a flow chart of a method according to a first embodiment of the present invention;
FIG. 4 is a flow chart of a method according to a second embodiment of the present invention;
FIGS. 5A and 5B are a flow chart of a method according to a third embodiment of the present invention;
FIGS. 6A and 6B are a flow chart of a method according to a fourth embodiment of the present invention; and
FIG. 7 is a schematic structural view of a terminal according to an embodiment of the present invention.

### DETAILED DESCRIPTION OF THE EMBODIMENTS

The technical solution of the present invention is clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

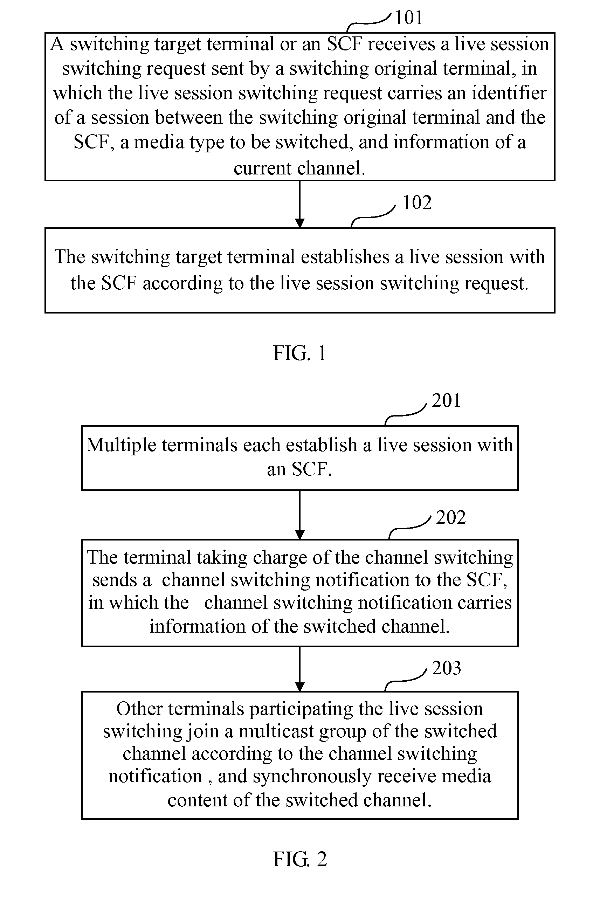

Referring to FIG. 1, it is a flow chart of a method for switching a live session according to an embodiment of the present invention. The method includes the following steps:
Step 101: A switching target terminal or an SCF receives a live session switching request sent by a switching original terminal. The request carries an identifier of a session between the switching original terminal and the SCF, a media type to be switched, and information of a current channel.

The switching target terminal or the switching original terminal may be any mobile terminal or fixed terminal capable of providing users with functions of IPTV content selection and display, and play control functions of the content.

The media type to be switched includes an audio type and/or a video type. According to the embodiment of the present invention, the switching of a live session includes the switching of the live session for a part of the media types and switching of the live session for all of the media types.

The information of the current channel includes an identifier and a profile of the current channel, and may also include channel access parameters, such as a multicast address and a port number.

When a live program received by the switching original terminal includes multiple media streams, the live session switching request sent by the switching original terminal to the switching target terminal or the SCF may further carry a media line identifier. The media line identifier is used to indicate the media stream to be switched. That is, in the method according to this embodiment, a live session may be switched for a specific media stream, and during the switching, precise media switching can be performed by using a media line as the unit and using the media line identifier to indication a media stream to be switched for example, label = 1.

When multiple switching target terminals exist, the live session switching request sent by the switching original terminal to the switching target terminals or the SCF further carries switching group member information. The switching group member information includes an identifier of the switching target terminal. For example, a Session Initiation Protocol Uniform Resource Identifier (SIP URI) can be used to correspond to a switching target terminal.

The switching request sent by the switching original terminal to the switching target terminal or the SCF may further carry an instruction for specifying the switching target terminal to take charge of channel switching. Therefore, after switching of the live session switching is completed, the specified switching target terminal controls the channel switching for the user.

Before the step in which the switching target terminal receives the live session switching request sent by the switching original terminal or the SCF, the method may further include that the switching original terminal sends the live session switching request to the SCF. That is, when the switching of the live session is to be performed, the switching original terminal may directly send the live session switching request to the switching target terminal, or may send the live session switching request to the SCF, and then the SCF sends the live session switching request to the switching target terminal.

Furthermore, when multiple switching target terminals exist, the switching original terminal may send the live session switching request to the SCF batch by batch, or may send the switching request to the SCF intensively. Then, the SCF sends the live session switching request to the switching target terminals one by one.

Step 102: The switching target terminal establishes a live session with the SCF according to the live session switching request.

The SCF takes charge of session control, resource reservation, and service authentication of an IPTV service, for example, establishment and modification of a live session or an on-demand session; and judges whether an IPTV user can access the IPTV service according to a profile of the user.

The step in which the switching target terminal establishes the live session with the SCF may include the following steps:
The switching target terminal sends a live session establishment request invite to the SCF. The live session establishment request invite carries the identifier of the session between the switching original terminal and the SCF, the media type to be switched, and the information of the current channel.

The SCF returns a response message to the switching target terminal. The response message carries information of all channels of the switching original terminal.

The information of all channels of the switching original terminal refers to all IPTV program identifiers of the switching original terminal and multicast addresses of all IPTV program of the switching original terminal, and so on.

During the procedure in which the switching target terminal establishes the live session with the SCF, the switching target terminal may report an ability profile thereof to the SCF. The SCF performs matching according to the ability profile of the switching target terminal, and returns proper program access information to the switching target terminal, for example, provides a multicast group satisfying the ability profile for the switching target terminal. That is, the live session establishment request invite sent by the switching target terminal to the SCF carries the ability profile of the switching target terminal, and the response message returned by the SCF to the switching target terminal carries the multicast group matching the ability profile of the switching target terminal.

The switching target terminal joins the multicast group of the current channel, and receives the media type to be switched.

In this step, Elementary Control Functions (ECFs) or Elementary Forwarding Functions (EFFs) take charge of management of the multicast group and the transmission of a multicast group stream.

After the step in which the switching target terminal joins the multicast group of the current channel, and receives the media type to be switched, the method further includes the following steps:
The switching target terminal sends a session switching success notification to the switching original terminal. The session switching success notification carries an identifier of the live session established between the switching target terminal and the SCF.

The step in which the switching target terminal establishes the live session with the SCF may further include the following steps:
The SCF sends the live session establishment request to the switching target terminal. The live session establishment request carries the identifier of the session between the switching original terminal and the SCF, the media type to be switched, the information of the current channel, and information of all channels of the switching original terminal.

The switching target terminal returns a response message to the SCF.

The switching target terminal joins the multicast group of the current channel, and receives media content to be switched.

The SCF sends a session switching success notification to the switching original terminal. The session switching success notification carries the identifier of the live session established between the switching target terminal and the SCF.

The switching original terminal may again switch back media content already switched according to the identifier of the established live session in the session switching success notification. For example, if one switch fails during an entire session switching procedure, the switching original terminal switches back a media stream already switched according to an identifier of a newly established live session provided by a target terminal of successful switching.

After the step in which the switching target terminal sends the session switching success notification to the switching original terminal, the switching original terminal modifies the live session with the SCF, and receives only media content not switched yet, or the switching original terminal leaves the multicast group, and ends the live session with the SCF after all media content is switched.

In the method for switching of a live session according to the embodiment of the present invention, the switching original terminal sends the live session switching request to the switching target terminal or the SCF. The live session switching request carries the identifier of session between the switching original terminal and the SCF, the media type to be switched, and the information of the current channel, so that the target terminal is notified of establishing the live session with the SCF, the target terminal establishes the live session with the SCF according to parameters carried in the live session switching request, joins the multicast group, and receives a video stream or an audio stream being played by the switching original terminal. Because the live session switching request carries the channel information of the original terminal, synchronously switching of the multiple target terminals can be achieved during the switching of the live session procedure after the target terminal and the original terminal complete the switching of the live session. Furthermore, the live session switching request carries the media line identifier according to the demands, so that precise media switching of multiple video streams or audio steams of the original terminal can be achieved, or the live session switching request carries the switching group member information. If the switching original terminal sends the live session switching request to the SCF first, the switching original terminal may send the live session switching request to the SCF batch by batch or intensively, and then the SCF switches the live program of the original terminal to the multiple switching target terminals based on the media type and/or the media stream one by one; or the live session switching request carries the instruction for specifying the switching target terminal to take charge of the channel switching, so that the channel switching function control the change of a terminal. Furthermore, after the switching of the live session is completed, the switching original terminal may switch back the media content already switched according to the identifier of the live session newly established between the switching target terminal and the SCF. Therefore, with the method for switching a live session according to the embodiment of the present invention, user experience can be enriched, and different user demands can be satisfied.

On the basis of the method for switching a live session according to the embodiment of the present invention, an embodiment of the present invention provides a method for switching a channel synchronously among multiple terminals. As shown in FIG. 2, the method includes the following steps:
Step 201: Each of multiple terminals establishes a live session with an SCF.

In the method for switching a live session according to the embodiment of the present invention, the each of multiple terminals establishes the live session with the SCF. The SCF performs session control, resources reservation, and service authentication on an IPTV service of the each of multiple terminals, judges whether the terminal can access the IPTV service according to an ability profile of the terminal, and returns a multicast group matching the ability profile to the terminal.

During the procedure in which the each of multiple terminals has established the live session with the SCF, a switching target terminal knows a session identifier of an original terminal, switching group member information, information of a current channel and information of all channels of the original terminal, information of a terminal taking charge of the switching after session switching, and information of a multicast group matching the ability profile of each of the terminals according to parameters carried in a switching request.

Step 202: The terminal taking charge of the channel switching sends a channel switching notification to the SCF. The channel switching notification carries information of the switched channel.

The terminal taking charge of the channel switching may be a switching original terminal participating in switching of the live session, or a switching target terminal participating in the switching of the live session. If the terminal taking charge of the channel switching is the switching target terminal participating in the switching of the live session, the switching target terminal sends the channel switching notification to the SCF according to switching group member information provided by the switching original terminal.

The information of the switched channel includes an identifier and a profile of the switched channel, and access parameters of the channel, such as a multicast address and a port number. The channel switching notification can be implemented in an SIP INFO manner or an SIP MESSAGE manner.

Step 203: Other terminals participating in the switching of the live session join a multicast group of the switched channel according to the channel switching notification, and synchronously receive media content of the switched channel.

During the channel switching, the terminal taking charge of the channel switching may directly notify other terminals participating in the switching of the live session, so that other terminals switch the channel synchronously; or the terminal taking charge of the channel switching first sends the channel switching notification to the SCF, and then the SCF forwards the channel switching notification to other terminals participating in the switching of the live session.

In the method for switching a channel synchronously among multiple terminals according to the embodiment of the present invention, when switching the channel, the terminal taking charge of the channel switching may first send the channel switching notification to the SCF, and the SCF forwards the channel switching notification to other terminals participating in the switching of the live session; or the terminal taking charge of the channel switching directly sends the channel switching notification to other terminals participating in the switching of the live session. The channel switching notification carries the identifier of session between the switching original terminal and the SCF, and the information of the switched channel, so that other terminals participating in the switching of the live session switch to a new channel according to the channel information in the notification, thereby being consistent with the channel to which the terminal taking charge of the channel switching switches. Thus, synchronous channel switching among the multiple terminals participating in the switching of the live session is achieved.

In the following, the method for switching of a live session and the method for switching a channel synchronously among multiple terminals after switching of the live session according to the present invention are described with specific embodiments.

### Embodiment 1:

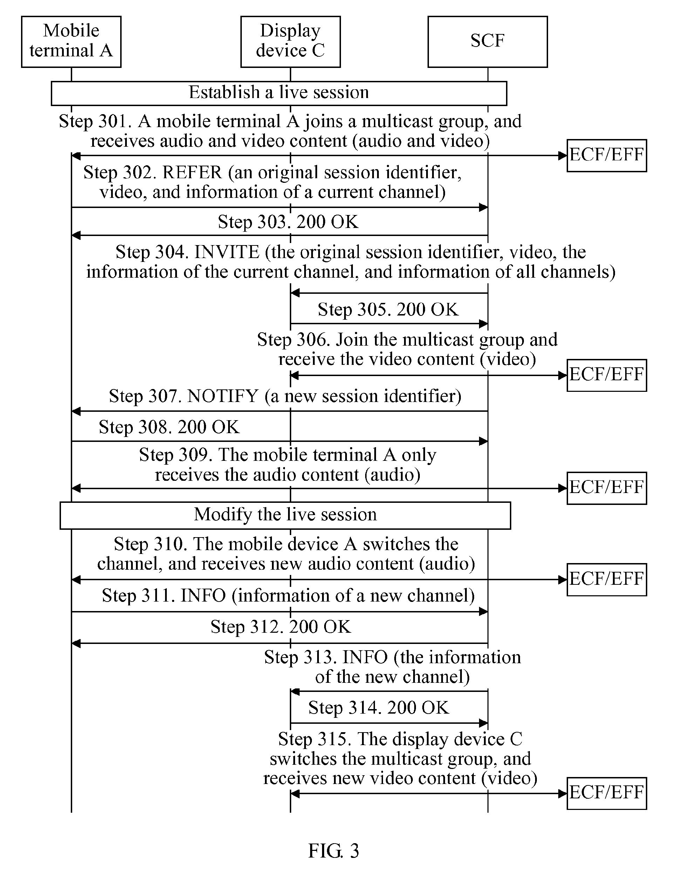

Referring to FIG. 3, it is a flow chart of a method for switching of a live session and a method for switching a channel synchronously among multiple terminals after the switching of the live session according to a first embodiment of the present invention. In a scenario in which a user expects to experience, the user receives a certain live program through a mobile terminal A at home. When the user enters a bedroom, the user switches the video of the live program to a display device C, and the audio is still received by the mobile terminal A. When the user uses the mobile terminal A to switch a channel, the display device C also synchronously switch the channel.

Step 301: A mobile terminal A establishes a live session with an SCF, joins a multicast group, receives a live program, and receives the audio and the video, in this embodiment, it is assumed that the received content is a live program CCTV1 (the program includes the audio and the video, and a Call-ID is 123@mobile.example.com).

Step 302 and 303: The mobile terminal A initiates switching of the live session, and sends a live session switching request in REFER manner to the SCF. The live session switching request carries a session identifier (123@mobile.example.com) of the mobile terminal A and the SCF, a media type (video) to be switched, and information of a current channel (CCTV1). The mobile terminal A notifies the SCF of establishing a media session with the display device C, and inviting the display device C to join a multicast group of the current channel and receive a video stream. The SCF returns 200 OK to the mobile device A. For example, a live session switching request may be:
REFER sip:SCF@example.com SIP/2.0
To: <sip:SCF@example.com >
From: <sip: mobile@example.com>
Refer-To: <sip:video@example.com?moblity=" 123@ mobile.example.com; media=video;
to-tag=aaa;from-tag=bbb">
Referred-By: <sip:mobile@example.com>

Step 304 and 305: The SCF sends a live session establishment request in INVITE manner to the display device C according to the live session switching request in REFER manner. The live session establishment request in INVITE manner carries the identifier (123@mobile.example.com) of the session between the mobile terminal A and the SCF, the media type (video) to be switched, the information of the current channel (CCTV1), and information of all channels which the mobile terminal A is capable of receiving. The display device C returns 200 OK to the SCF.

Step 306: The display device C joins the multicast group of the current channel, and receives video content of the CCTV1.

Step 307 and 308: The SCF notifies the mobile terminal A that the switching is successful. The channel switching notification in NOTIFY manner carries an identifier (456@video.example.com) of a session between the display device C and the SCF. The mobile terminal A returns 200 OK to the SCF.

Step 309: The mobile device A receives only audio content of the CCTV1, and modifies the live session established with the SCF.

Step 310: The mobile device A switches the channel, for example, switches the channel CCTV1 to a channel CCTV2, joins a new multicast group, and receives audio content of the channel CCTV2.

Step 311 and 312: The mobile device A sends a channel switching notification in INFO manner to the SCF. The channel switching notification in INFO manner carries information of the switched channel CCTV2. The SCF returns 200 OK to the mobile device A.

Step 313 and 314: The SCF sends the channel switching notification in INFO manner to the display device C according to switching member information provided by the mobile terminal A during the session switching. The channel switching notification in INFO manner carries the information of the switched channel CCTV2. The display device C returns 200 OK to the SCF.

Step 315: According to parameters carried in the channel switching notification in INFO manner, the display device C exits from the multicast group of the CCTV1, joins the multicast group of the CCTV2, and receives the video of a live program of the channel CCTV2, so that synchronous channel switching is achieved.

### Embodiment 2:

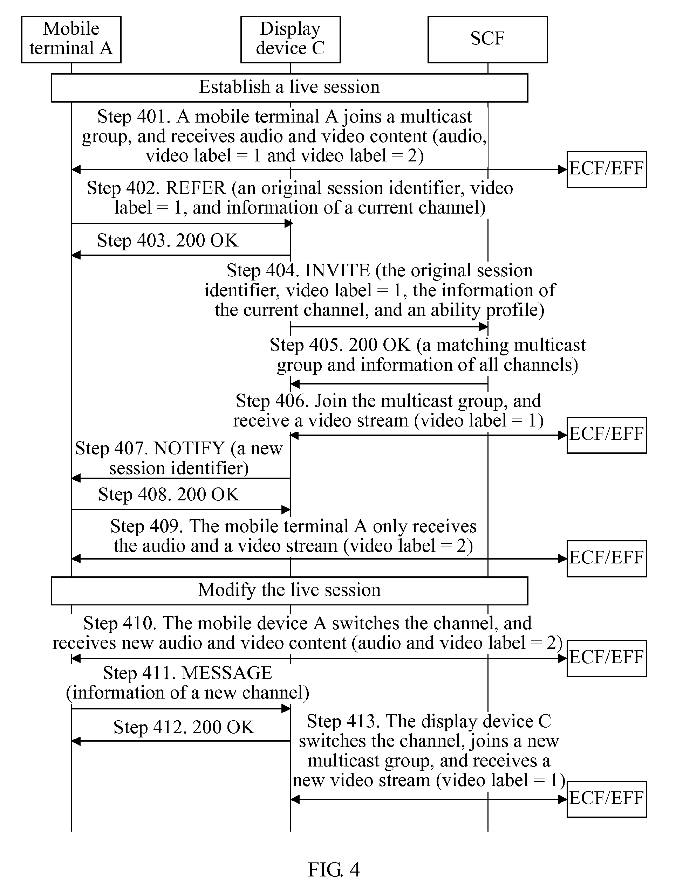

Referring to FIG. 4, it is a flow chart of a method for switching of a live session and a method for switching a channel synchronously among multiple terminals after the switching of the live session according to a second embodiment of the present invention. In a scenario in which a user expects to experience, the user receives a certain live program through a mobile terminal A at home. The live program includes two video streams (a video stream 1 and a video stream 2). When the user enters a bedroom, the user switches the video stream 1 of the live program to a display device C, and the video stream 2 is still received by the mobile terminal A. When the user uses the mobile terminal A to switch a channel, the display device C also synchronously switches the channel.

Step 401: When a mobile terminal A establishes a live session (with a Call-ID being 123@mobile.example.com) with an SCF, joins a multicast group, and receives the audio and the video of a live program, for example, receives the live program CCTV1, in which the CCTV1 includes two video streams being video label = 1 and video label = 2.

Step 402 and 403: The mobile terminal A initiates switching of the live session, and sends a live session switching request in REFER manner to a display device C. The live session switching request carries the identifier (CALL-ID: 123@mobile.example.com) of session between the mobile terminal A and the SCF, a media type (video) to be switched, a media line identifier (label = 1), and information of a current channel (CCTV1). The mobile terminal A notifies the display device C to establish a media session with the SCF, joina multicast group of the current channel, and receive the video stream with video label = 1. The display device C returns 200 OK to the mobile device A.

Step 404: The display device C sends a live session establishment request in INVITE manner to the SCF according to the live session switching request in REFER manner. The live session establishment request in INVITE manner carries the original session identifier (123@mobile.example.com), the media stream to be switched (video label = 1), the information of the current channel (CCTV1), and an ability profile of the display device C.

Step 405: The SCF returns 200 OK to the display device C. The 200 OK carries a multicast group matching the ability profile of the display device C, and information of all channels of the mobile device A, such as identifiers of all the channels and a multicast address.

Step 406: The display device C joins the matching multicast group according to parameters provided by the SCF, and receives video stream content with video label = 1.

Step 407 and 408: The display device C notifies the mobile terminal A that the switching is successful. The channel switching notification in NOTIFY manner carries an identifier (456@videol.example.com) of a session between the display device C and the SCF. The mobile terminal A returns 200 OK to the display device C.

Step 409: The mobile device A receives only content of the audio and the video stream (video label=2) of the CCTV1, and modifies the live session established with the SCF.

Step 410: The mobile device A switches the channel, for example, switch the channel CCTV1 to a channel CCTV2, joins a new multicast group, and receives content of the audio and a video stream (video label=2) of the channel CCTV2.

Step 411 and 412: The mobile device A sends a channel switching notification in MESSAGE manner to the display device C. The channel switching notification in MESSAGE manner carries information of the switched channel CCTV2. The display device C returns 200 OK to the mobile device A.

Step 413: According to parameters carried in the channel switching notification in MESSAGE manner, the display device C joins the multicast group of the CCTV2, and receives a video stream (video label=1) of the channel CCTV2, so that synchronous channel switching is achieved.

### Embodiment 3:

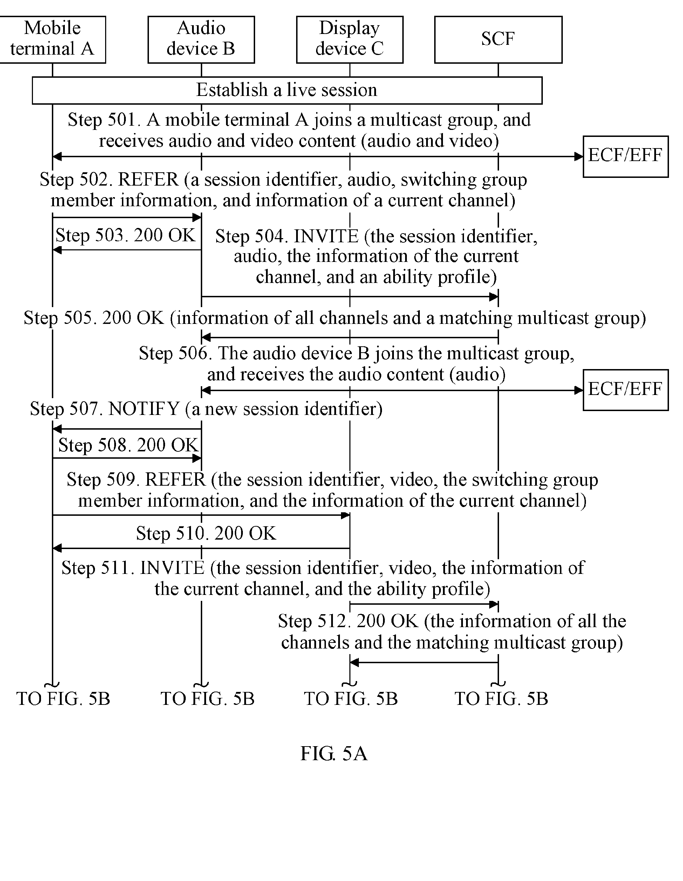

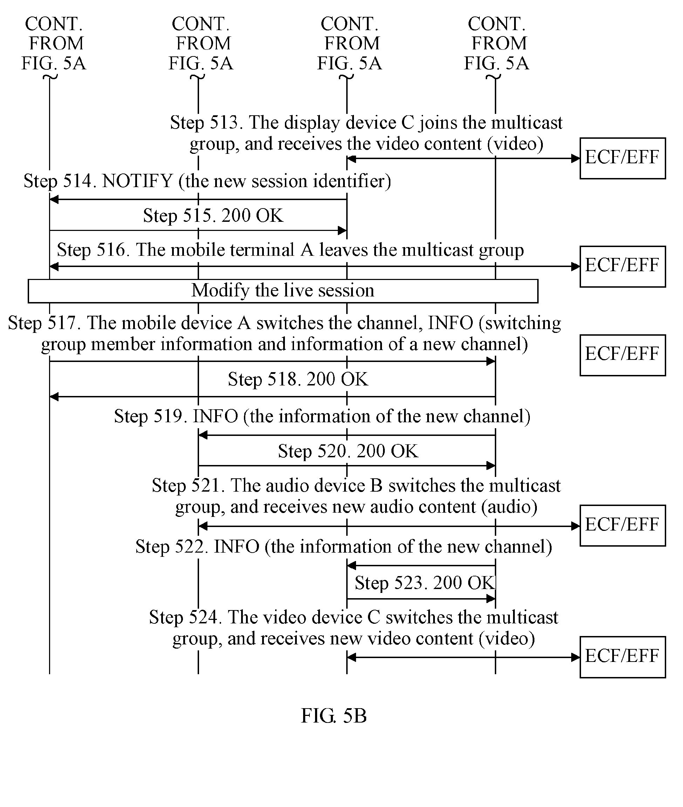

Referring to FIG. 5, it is a flow chart of a method for switching of a live session and a method for switching a channel synchronously among multiple terminals after the switching of the live session according to a third embodiment of the present invention. In a scenario in which a user expects to experience, the user receives a certain live program through a mobile terminal A at home. When the user enters a bedroom, the user switches the audio of the live program to an audio device B, and switches the video to a display device C. When the user uses the mobile terminal A to switch a channel, the audio device B and the display device C also synchronously switch the channel.

Step 501: A mobile terminal A establishes a live session with an SCF, joins a multicast group, receives a live program, and receives the audio and the video. In this embodiment, it is assumed that the received content is a live program CCTV1 (the program includes the audio and the video, and a Call-ID is 123@mobile.example.com).

Step 502 and 503: The mobile terminal A initiates switching of the live session, and sends a live session switching request in REFER manner to an audio device B. The live session switching request carries the session identifier (CALL-ID: 123@mobile.example.com) of the mobile terminal A and the SCF, a media type (audio) to be switched, switching group member information (such as an SIP URI1 corresponding to the audio device B, and an SIP URI2 corresponding to a display device C), and information of the current channel (CCTV1). The mobile terminal A notifies the audio device B of establishing a media session with the SCF, joining a multicast group corresponding to the program to be switched, and receiving an audio stream. The audio device B returns 200 OK to the mobile device A.

Step 504: The audio device B sends a live session establishment request in INVITE manner to the SCF according to the live session switching request in REFER manner. The live session establishment request INVITE carries the original session identifier (123@mobile.example.com), the media type (audio) to be switched, the information of the current channel (CCTV1), and an ability profile of the audio device B.

Step 505: The SCF returns 200 OK to the audio device B. The 200 OK carries a multicast group matching the ability profile of the audio device B, and information of all channels of the mobile device A, such as identifiers of all of the channels and a multicast address.

Step 506: The audio device B joins a matching multicast group according to parameters provided by the SCF, and receives audio content.

Step 507 and 508: The audio device B notifies the mobile terminal A that the switching is successful. The channel switching notification referring to NOTIFY carries an identifier (456@videol.example.com) of a session between the audio device B and the SCF. The mobile terminal A returns 200 OK to the audio device B.

Step 509 and 510: The mobile terminal A sends a live session switching request in REFER manner to the display device C. The live session switching request carries the identifier (123@mobile.example.com) of session between the mobile terminal A and the SCF, a media type (video) to be switched, the switching group member information, and information of the current channel (CCTV1). The mobile terminal A notifies the display device C to establish a media session with the SCF, join a multicast group corresponding to the program to be switched, and receives a video stream. The display device C returns 200 OK to the mobile device A.

Step 511: The display device C sends a live session establishment request in INVITE manner to the SCF according to the live session switching request in REFER manner. The live session establishment request in INVITE manner carries the original session identifier (123@mobile.example.com), the media type to be switched (video), the information of the current channel (CCTV1), and an ability profile of the display device C.

IStep 512: The SCF returns 200 OK to the display device C. The 200 OK carries a multicast group matching the ability profile of the display device C, and the information of all of the channels of the mobile device A, such as the identifiers of all of the channels and the multicast address.

IStep 513: The display device C joins a matching multicast group according to the parameters provided by the SCF, and receives video content.

Step 514 and 515: The display device C notifies the mobile terminal A that the switching is successful. The channel switching notification in NOTIFY manner carries a session identifier (789@videol.example.com) of the display device C and the SCF. The mobile terminal A returns 200 OK to the display device C.

Step 516: The mobile device A modifies the live session with the SCF, leaves the multicast group, and does not receive any audio or video.

Step 517 and 518: The mobile device A switches the channel, for example, switch the channel CCTV1 to a channel CCTV2. The mobile device A sends a channel switching notification in INFO manner to the SCF. The channel switching notification in INFO manner carries information of the switched channel CCTV2, and the switching group member information (the SIP URI1 corresponding to the audio device B, and the SIP URI2 corresponding to a display device C). The SCF returns 200 OK to the mobile device A.

Step 519 and 520: The SCF sends a channel switching notification in INFO manner to the audio device B. The channel switching notification in INFO manner carries the information of the switched channel CCTV2. The audio device B returns 200 OK to the SCF.

Step 521: The audio device B joins a new matching multicast group to receive the audio of the live program of the channel CCTV2 according to parameters carried in the channel switching notification in INFO manner, so that synchronous channel switching is achieved.

Step 522 and 523: The SCF sends a channel switching notification in INFO manner to the display device C. The channel switching notification in INFO manner carries the information of the switched channel CCTV2. The display device C returns 200 OK to the SCF.

Step 524: The display device C joins a new matching multicast group to receive the video of the live program of the channel CCTV2 according to parameters carried in the notification of channel switching INFO, so that synchronous channel switching is achieved.

### Embodiment 4:

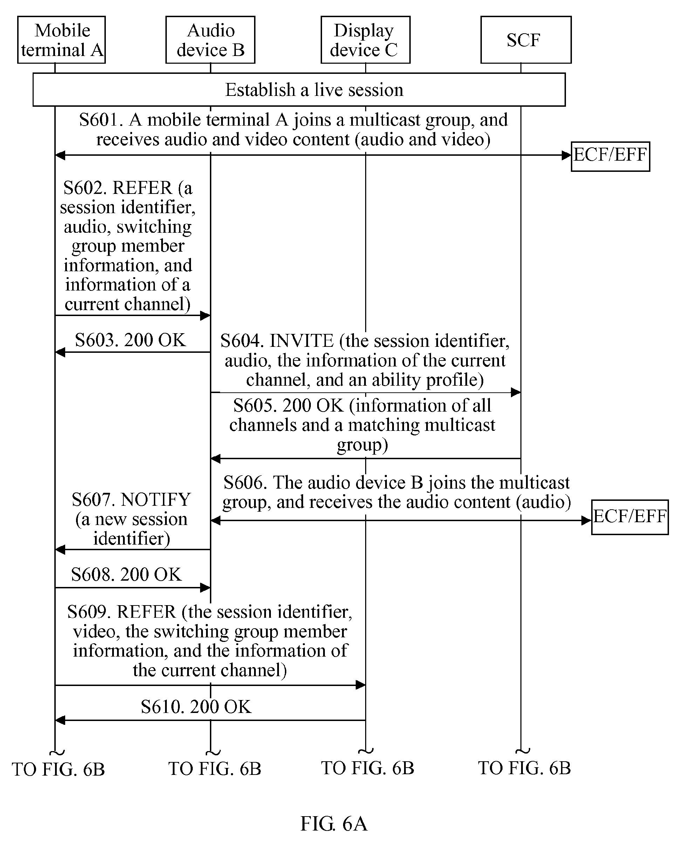

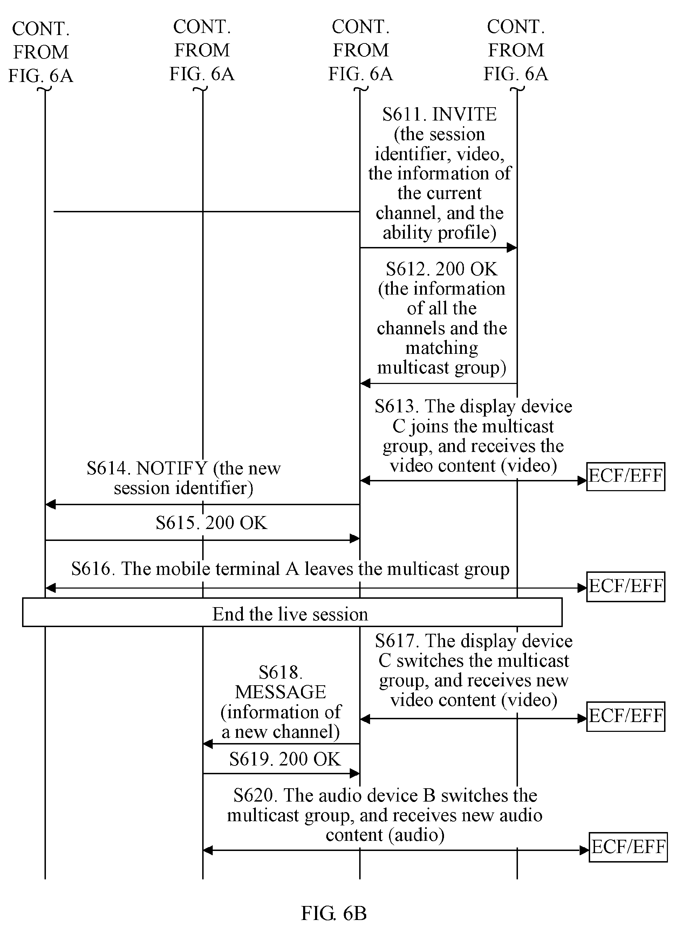

Referring to FIG. 6, it is a flow chart of a method for switching of a live session and a method for switching a channel synchronously among multiple terminals after the switching of the live session according to a fourth embodiment of the present invention. In a scenario in which a user expects to experience, the user receives a certain live program through a mobile terminal A at home. When the user enters a bedroom, the user switches the audio of the live program to an audio device B, switches the video to a display device C, and specifies the display device C to take charge of channel switching. The users turn off the mobile terminal A. When the user uses the display device C to switch a channel, the display device B also synchronously switches the channel.

Step 601: A mobile terminal A establishes a live session with an SCF, joins a multicast group, receives a live program, and receives the audio and video. In this embodiment, it is assumed that the received content is a live program CCTV1 (the program includes the audio and the video, and a Call-ID is 123@mobile.example.com.

Step 602 and 603: The mobile terminal A initiates switching of the live session, and sends a live session switching request in REFER manner to an audio device B. The live session switching request carries an identifier (CALL-ID: 123@mobile.example.com) of a session between the mobile terminal A and the SCF, a media type (audio) to be switched, switching group member information (such as an SIP URI1 corresponding to the audio device B and an SIP URI2 corresponding to a display device C), information of the current channel (CCTV1), and an indication indicating that the display device C takes charge of channel switching. The mobile terminal A notifies the audio device B of establishing a media session with the SCF, joining a multicast group corresponding to the program to be switched, and receiving an audio stream. The audio device B returns 200 OK to the mobile device A.

Step 604: The audio device B sends a live session establishment request in INVITE manner to the SCF according to the live session switching request in REFER manner. The live session establishment request in INVITE manner carries the original session identifier (123@mobile.example.com), the media type (audio) to be switched, the information of the current channel (CCTV1), and an ability profile of the audio device B.

Step 605: The SCF returns 200 OK to the audio device B. The 200 OK carries a multicast group matching the ability profile of the audio device B, and all information of channels of the mobile device A, such as identifiers of all of the channels and a multicast address.

Step 606: The audio device B joins a matching multicast group according to parameters provided by the SCF, and receives audio content.

Step 607 and 608: The audio device B notifies the mobile terminal A that the switching is successful. The channel switching notification in NOTIFY manner carries an identifier (456@videol.example.com) of a session between the audio device B and the SCF. The mobile terminal A returns 200 OK to the audio device B.

Step 609 and 610: The mobile terminal A sends a switching of the live session switching request in REFER manner to the display device C. The live session switching request carries the identifier (123@mobile.example.com) of a session between the mobile terminal A and the SCF, a media type (video) to be switched, the switching group member information, information of the current channel (CCTV1), and the indication indicating that the display device C takes charge of the channel switching. The mobile terminal A notifies the display device C to establish a media session with the SCF, join a multicast group corresponding to the program to be switched, and receive a video stream. The display device C returns 200 OK to the mobile device A. For example, the live session switching request may be:

```
          REFER sip:video@example.com SIP/2.0
          To: <sip:video@example.com>
          From: <sip: mobile@example.com>
          Refer-To:<sip:SCF@example.com?moblity=" 123@ mobile.example.com; media=video;
          application=IGMP;to-tag=aaa;from-tag=bbb">
          Referred-By: <sip:mobile@example.com>
          Content-Type: application/resource-lists+xml
          Content-Length: 362
              <?xml version="1.0" encoding="UTF-8"?>
              <resource-lists xmlns="urn:ietf:params:xml:ns:resource-lists"
                        xmlns:xsi="http://www.w3.org/2001/XMLSchema-instance">
                <list>
                   <entry uri="sip:audio@example.com" />
                   <entry uri="sip:video@example.com;application=IGMP" />
                </list>
              </resource-lists>
```

Step 611: The display device C sends a live session establishment request in INVITE manner to the SCF according to the live session switching request in REFER manner. The live session establishment request in INVITE manner carries the original session identifier (123@mobile.example.com), the media type (video) to be switched, the information of the current channel (CCTV1), and an ability profile of the display device C.

Step 612: The SCF returns 200 OK to the display device C. The 200 OK carries a multicast group matching the ability profile of the display device C, and the information of all of the channels of the mobile device A, such as the identifiers of all of the channels and the multicast address.

Step 613: The display device C joins a matching multicast group according to the parameters provided by the SCF, and receives video content.

Step 614 and 615: The display device C notifies the mobile terminal A that the switching is successful. The channel switching notification in NOTIFY manner carries an identifier (789@videol.example.com) of a session between the display device C and the SCF. The mobile terminal A returns 200 OK to the display device C.

Step 616: The mobile device A leaves the multicast group, and ends the live session with the SCF.

Step 617: The display device C switches the channel, for example, switch the channel CCTV1 to a channel CCTV2, joins a new multicast group, and receives new video content.

Step 618 and 619: The display device C sends a channel switching notification in MESSAGE manner to the audio device B according to the switching group member information provided by the mobile device A. The channel switching notification in MESSAGE manner carries the information of the switched channel CCTV2. The audio device B returns 200 OK to the display device C. For example, the notification of channel switching MESSAGE may be:

```
          MESSAGE sip:audio@example.com SIP/2.0
          Via: SIP/2.0/TCP agent.example.com;branch=z9hG4bK776sgdkse
          Max-Forwards: 70
          From: sip:video@example.com;tag=49583
          To: sip:audio@example.com
          Call-ID: asd88asd77a@1.2.3.4
          CSeq: 1 MESSAGE
          Content-Type: application/iptvcc+xml
          Content-Length: 50
          <?xml version="1.0" encoding="UTF-8"?>
          <iptvcc xmlns="urn:ietf:params:xml:ns: iptvcc" >
             <Call ID> 123@mobile.example.com</Call ID>
             <Service ID>tv:cctv2.com</Service ID>
          </iptvcc>
```

Step 620: According to parameters carried in the channel switching notification in MESSAGE manner, the audio device B joins a new matching multicast group, and receives the audio of the live program of the channel CCTV2, so that synchronous channel switching is achieved.

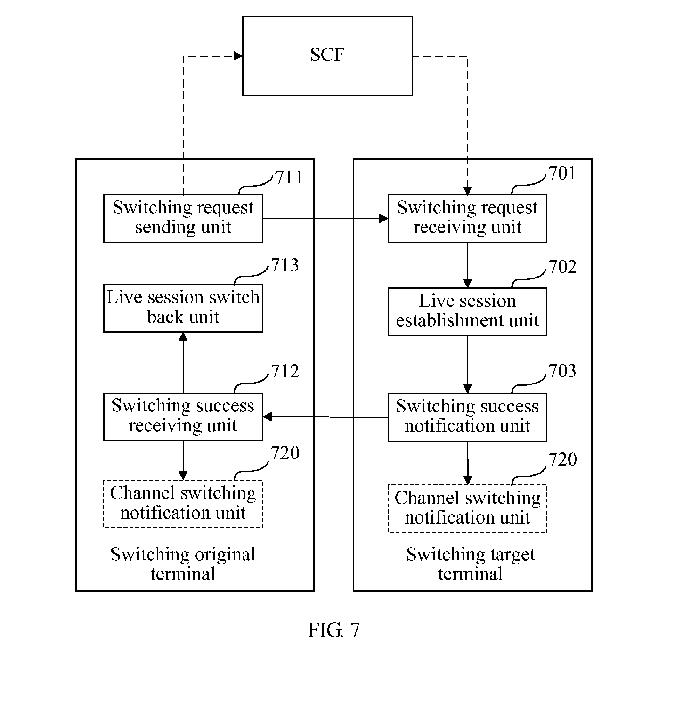

On the basis of the method for switching of a live session and the method for switching a channel synchronously among multiple terminals after the switching of the live session according to the present invention, and corresponding to a target terminal of the switching of the live session, an embodiment of the present invention provides a terminal. As show in FIG. 7, the terminal includes a switching request receiving unit 701, a live session establishment unit 702, and a switching success notification unit 703.

The switching request receiving unit 701 is configured to receive a live session switching request sent by a switching original terminal. The live session switching request carries an identifier of a session between the switching original terminal and an SCF, a media type to be switched, and information of a current channel.

The live session establishment unit 702 is configured to establish a live session with the SCF according to the live session switching request, join a multicast group of the current channel according to the established live session, and receive the media type to be switched.

The switching success notification unit 703 is configured to send a session switching success notification to the switching original terminal. The session switching success notification carries an identifier of the live session established with the SCF.

Corresponding to an original terminal of switching of the live session, an embodiment of the present invention further provides a terminal. Also referring to FIG. 7, the terminal includes a switching request sending unit 711 and a switching success receiving unit 712.

The switching request sending unit 711 is configured to send a live session switching request to a switching target terminal or an SCF. The live session switching request carries an identifier of a session between a switching original terminal and an SCF, a media type to be switched, and information of a current channel.

When a live program received by the switching original terminal includes multiple media streams, the switching request sending unit 711 is further configured to carry a media line identifier in the live session switching request sent to the switching target terminal or the SCF. The media line identifier is used to indicate the media stream to be switched.

When multiple switching target terminals exist, the switching request sending unit 711 may be configured to carry switching group member information in the live session switching request sent to the switching target terminals or the SCF. The switching group member information includes identifiers of all the switching target terminals.

If a terminal taking charge of channel switching is required to be changed, the switching request sending unit 711 is further configured to carry an instruction for specifying the switching target terminal to take charge of the channel switching in the live session switching request sent to the switching target terminal or the SCF.

The switching success receiving unit 712 is configured to receive a session switching success notification sent by the switching target terminal or the SCF. The notification carries an identifier of session between the switching target terminal and the SCF.

According to the notification of the successful switching of the switching target terminal, the switching original terminal further includes a live session switch back unit 713.

The live session switch back unit 713 is configured to switch back a media type already switched according the identifier of a session between the switching target terminal and the SCF carried in the notification of session switching success.

Also referring to FIG. 7, on the basis of the method for switching a channel synchronously among multiple terminals according to the present invention, the two terminals according to the present invention may further include a channel switching notification unit 720.

The channel switching notification unit 720 is configured to send a channel switching notification to the SCF or other terminals participating in switching of the live session. The channel switching notification carries information of the switched channel.

The terminal may be a switching original terminal participating in the switching of the live session, or a switching target terminal participating in the switching of the live session. If the terminal taking charge of the channel switching is the switching target terminal participating in the switching of the live session, the switching target terminal sends the channel switching notification to the SCF or other terminals participating in the switching of the live session according to switching group member information provided by the switching original terminal.

The terminals according to the present invention include the switching original terminal and the switching target terminal. The switching request sending unit 711 of the switching original terminal sends the live session switching request to the switching target terminal or the SCF. The live session switching request carries the identifier of session between the switching original terminal and the SCF, the media type to be switched, and the information of the current channel, so that the target terminal is notified of establishing the live session with the SCF, and receiving the video or audio being the same as that of the live program being played by the original terminal. The switching request receiving unit 701 of the target terminal receives the live session switching request, and the live session establishment unit 702 establishes the live session with the SCF according to the parameters carried in the live session switching request, joins the multicast group of the current channel, and receives the media type to be switched. Because the live session switching request carries the channel information of the original terminal, after the target terminal and the original terminal complete the switching of the live session, synchronous channel switching among the multiple terminals performing the switching of the live session can be achieved. Furthermore, the switching request carries the media line identifier according to the demands, so that the precise media switching of the multiple video streams and the multiple audio streams of the original terminal can be achieved; or the switching request carries the switching group member information, so that the switching to the multiple target terminals is achieved; or the switching request carries the instruction for specifying the switching target terminal to take charge of the channel switching, so that the channel switching control function terminal can be changed. Further, after completing the switching of the live session, the switching original terminal can switch back the media content already switched through the live session switch back unit 713 according to the identifier of the live session newly established between the switching target terminal and the SCF carried in the switching success notification unit 703. Therefore, through the switching original terminal and the switching target terminal according to the present invention, user experience can be enriched, and different user demands can be satisfied.

Furthermore, the multiple terminals after the switching of the live session send the channel switching notification to the SCF or directly to other terminals participating in the switching of the live session through the channel switching notification unit 720, when the terminal taking charge of the channel switching performs the channel switching. The channel switching notification carries the information of the switched channel, so that other terminals participating in the switching of the live session switch to the new channel according to the channel information in the channel switching notification, thereby being consistent with the channel to which the terminal taking charge of the switching switches. Thus, synchronous channel switching among the multiple terminals participating in the switching of the live session is achieved.

Through the description of the embodiments, it is clear to persons skilled in the art that the present invention may be accomplished through hardware, or through software plus a necessary universal hardware platform. But in many cases, the software implementation is preferred. Based on this, the technical solutions according to the present invention or the part that makes contributions to the prior art can be substantially embodied in the form of a software product. The software product may be stored in a storage medium, and contain several indications to instruct mobile equipment (for example, a mobile phone, a personal computer, or a media player) to perform the methods described in the embodiments of the present invention. The storage medium here includes a ROM/RAM, a magnetic disk, and an optical disk.

The method for switching of a live session, the method for switching a channel synchronously among multiple terminals, and the terminal according to the present invention are described in detail. The description about the embodiments of the present invention is merely provided for ease of understanding of the methods and ideas of the present invention. Persons of ordinary skill in the art can make variations and modifications to the present invention in terms of the specific implementations and application scopes according to the ideas of the present invention. Therefore, the protection scope of the present invention should be the protection scope of the claims.

## Claims

1. A method for switching of a live session, comprising:
receiving, by a switching target terminal or a Service Control Function (SCF), a live session switching request sent by a switching original terminal, wherein the live session switching request carries an identifier of a session between the switching original terminal and the SCF, a media type to be switched, and information of a current channel; and
establishing, by the switching target terminal, a live session with the SCF according to the live session switching request.

2. The method according to claim 1, wherein the establishing, by the switching target terminal, the live session with the SCF according to the live session switching request comprises:
sending, by the switching target terminal, a live session establishment request to the SCF, wherein the live session establishment request carries the identifier of session between the switching original terminal and the SCF, the media type to be switched, and the information of the current channel;
receiving, by the switching target terminal, a response message returned by the SCF, wherein the response message carries information of all channels of the switching original terminal; and
joining, by the switching target terminal, a multicast group of the current channel, and receiving media content to be switched.

3. The method according to claim 2, wherein the live session establishment request further carries an ability profile of the switching target terminal; and
the response message returned by the SCF further carries a multicast group matching the ability profile of the switching target terminal.

4. The method according to claim 1, wherein the establishing, by the switching target terminal, the live session with the SCF according to the live session switching request comprises:
receiving, by the switching target terminal, a live session establishment request sent by the SCF, wherein the live session establishment request carries the identifier of session between the switching original terminal and the SCF, the media type to be switched, the information of the current channel, and information of all channels of the switching original terminal;
returning, by the switching target terminal, a response message to the SCF; and
joining, by the switching target terminal, a multicast group of the current channel, and receiving media content to be switched.

5. The method according to claim 2 or 4, wherein after the joining, by the switching target terminal, the multicast group of the current channel, and receiving the media content to be switched, the method further comprises:
sending, by the switching target terminal or the SCF, a session switching success notification to the switching original terminal, wherein the session switching success notification carries an identifier of a session between the switching target terminal and the SCF.

6. The method according to claim 5, further comprising:
switching back, by the witching original terminal, media content already switched according to the notification of session switching success.

7. The method according to claim 1, wherein the live session switching request further carries a media line identifier and/or switching group member information; the media line identifier is used to indicate a media stream to be switched, and the switching group member information comprises identifiers of all switching target terminals.

8. A method for switching a channel synchronously among multiple terminals, comprising:
establishing, by each of multiple terminals, a live session with a Service Control Function (SCF);
sending, by a terminal taking charge of channel switching, a channel switching notification, wherein the channel switching notification carries information of a switched channel;
joining, by other terminals participating in switching of the live session, a multicast group of the switched channel according to the channel switching notification, and receiving synchronously media content of the switched channel.

9. The method according to claim 8, further comprising: receiving, by the SCF, the channel switching notification, and forwarding the channel switching notification to other terminals participating in the switching of the live session.

10. The method according to claim 8, wherein the terminal taking charge of the channel switching is a switching original terminal participating in the switching of the live session, or a switching target terminal participating in the switching of the live session; if the terminal taking charge of the channel switching is the switching target terminal participating in the switching of the live session, the switching target terminal sends the channel switching notification to the SCF according to switching group member information provided by the switching original terminal.

11. A terminal, comprising:
a switching request receiving unit, configured to receive a live session switching request sent by a switching original terminal, wherein the live session switching request carries an identifier of session between the switching original terminal and a Service Control Function (SCF), a media type to be switched, and information of a current channel; and
a live session establishment unit, configured to establish a live session with the SCF according to the live session switching request.

12. The terminal according to claim 11, further comprising:
a switching success notification unit, configured to send a session switching success notification to the switching original terminal, wherein the session switching success notification carries an identifier of the live session established with the SCF.

13. The terminal according to claim 11, further comprising:
a channel switching notification unit, configured to send a channel switching notification to the SCF or the switching original terminal, wherein the channel switching notification carries information of a switched channel, so that other terminals participating in the switching of the live session join a multicast group of the switched channel according to the channel switching notification, and synchronously receive media content of the switched channel.

14. A terminal, comprising:
a switching request sending unit, configured to send a live session switching request to a switching target terminal or a Service Control Function (SCF), wherein the switching request carries an identifier of a session between a switching original terminal and the SCF, a media type to be switched, and information of a current channel.

15. The terminal according to claim 14, further comprising:
a switching success receiving unit, configured to receive a session switching success notification sent by the switching target terminal or the SCF, wherein the notification carries an identifier of a session between the switching target terminal and the SCF.

16. The terminal according to claim 14, further comprising:
a live session switch back unit, configured to switch back media content already switched according to an identifier of a session between the switching target terminal and the SCF carried in the session switching success notification.

17. The terminal according to claim 14, wherein the switching request sending unit is further configured to carry a media line identifier in the live session switching request sent to the switching target terminal or the SCF, wherein the media line identifier is used to indicate a media stream to be switched; and/or carry an instruction for specifying the switching target terminal to take charge of channel switching; and/or carry switching group member information, wherein the switching group member information comprises identifiers of all switching target terminals.

18. The terminal according to claim 14, further comprising:
a channel switching notification unit, configured to send a channel switching notification to the SCF or other terminals participating in switching of the live session, wherein the notification carries information of the switched channel, so that other terminals participating in the switching of the live session join a multicast group of the switched channel according to the notification of channel switching, and synchronously receive media content of the switched channel.
